# EUROPEAN PATENT SPECIFICATION

(11) **EP 1 701 892 B1**
(45) Date of publication and mention of the grant of the patent: **12.05.2010**
(21) Application number: 04808835.5
(22) Date of filing: 28.12.2004
(51) Int. Cl.: B65D 75/58, B65B 61/18, B29C 65/02, B29C 65/00

(54) **PLASTIC MEDIUM FEED-THROUGH PART, MOULD AND METHOD OF SEALING THE PART TO A BAG**
KUNSTSTOFFMEDIUMDURCHFÜHRUNGSTEIL, FORM UND VERFAHREN ZUM SCHWEISSEN DES TEILS AUF EINEM BEUTEL
PIECE TRAVERSANTE D'ALIMENTATION DE LIQUIDE EN PLASTIQUE, MOULE ET PROCéDé DE SOUDAGE DE LA PIECE A UN SAC

(30) Priority: 07.01.2004 NL 1025183
(43) Date of publication of application: 20.09.2006
(73) Proprietor: IPN IP B.V., 3992 DC Houten (NL)
(72) Inventor: LAST, Laurens, MC-98000 Monaco (MC)
(74) Representative: Brookhuis, Hendrik Jan Arnold
(86) International application number: PCT/NL2004/000919
(87) International publication number: WO 2005/066037

(56) References cited:
- EP-A- 0 493 723
- EP-A- 0 751 081
- EP-A- 1 182 144
- WO-A-96/21599
- WO-A-03/031280
- US-A- 4 329 134
- US-A- 4 732 299
- US-A- 5 823 383
- US-B1- 6 273 307
- PATENT ABSTRACTS OF JAPAN vol. 1999, no. 09, 30 July 1999 (1999-07-30) -& JP 11 105895 A (KEIHAN CELLOPHANE KK), 20 April 1999 (1999-04-20)

## Description

The invention relates to a plastic medium feed-through part, for example a spout, designed to be sealed by means of a sealing technique between film walls of a bag, comprising a plastic body which forms a channel for dispensing a medium from the bag and/or feeding it to the bag, which body has sealing sides situated opposite each other, each for achieving a sealed connection to an adjoining film wall.

It is generally known from the prior art to provide each of the sealing sides with a number of sealing ribs extending horizontally, i.e. in the longitudinal direction of the usually elongated sealing sides, in order to achieve a good sealed connection. This is known, for example from US 3 690 524 and EP 1 182 144.

In WO 03/031280, on which the preamble of claim 1 is based, it is proposed actually not to provide the sealing sides of the sealing walls with such sealing ribs, but to make them of a flat design, so that the sealed connection between the film walls and the body does not "become concentrated" at the position of sealing ribs as mentioned above, but is uniformly distributed over a relatively large sealing surface. This avoids the problem that, when the sealed connection is subjected to a load, the mechanical stresses become concentrated on those sealing ribs and cause local tearing and delamination of the film material there, which gives rise to quality problems and leakage.

The object of the present invention is to propose an improved version of the plastic medium feed-through part with ribless sealing sides, in particular of the spout according to WO 03/031280.

To that end, the invention provides a plastic medium feed-through part according to claim 1.

The sealing sides are preferably provided with a rough surface structure over substantially their entire surface.

It is preferable for no sealed connection to be provided in a narrow strip along the free edges of the sealing sides, and said strip is possibly not provided with a rough surface structure.

It is particularly preferable for the surface roughness value of the sealing sides to lie between 24 and 36 in accordance with VDI Richtlinie 3400, including those limit values.

It is advantageous in practice for the surface roughness value of the sealing sides to lie between 27 and 33 in accordance with VDI Richtlinie 3400, including those limit values.

VDI Richtlinie 3400 has the German title: "Electroerosive Bearbeitung. Begriffe, Verfahren, Anwendung" [Electrical Discharge Machining. Definitions, Process, Application]. This Richtlinie 3400 was published by the Verein Deutscher Ingenieure [Association of German Engineers] in June 1975.

The Rₐ (micrometer) and Rₜ (micrometer) are given in the table below for a number of relevant values, Rₐ being the mathematical mean value of the roughness depth, and Rₜ being the maximum roughness depth.

| | | | | | | | | | |
|---|---|---|---|---|---|---|---|---|---|
| VDI | 18 | 21 | 24 | 27 | 30 | 33 | 36 | 39 | 42 |
| value | | | | | | | | | |
| Rₐ | 0.8 | 1.1 | 1.6 | 2.3 | 3.2 | 4.6 | 6.3 | 9 | 13 |
| Rₜ | 4-6 | 5-7.5 | 9-13 | 12-16 | 16-20 | 21-25 | 37-45 | 45-60 | 60-90 |

Plastic medium feed-through parts for sealing into a bag which are provided with sealing sides with such a rough surface structure produce very good adhesion with the film walls of the bag. It also appears that producing the sealed connection between the film walls and the body of the medium feed-through part with the aid of suitable sealing/heat-sealing techniques can proceed at a very high speed without complications. Furthermore, the sealed connections perform very well if they are subjected to mechanical stress, for example in a drop test with a bag filled with liquid.

The invention further relates to a bag provided with such a medium feed-through element.

The invention further relates to a mould for injection moulding the medium feed-through part according to claim 9. The rough surface structure of the sealing sides is in fact preferably achieved by a suitable rough finish of the corresponding mould parts. Such a rough finish can be obtained by, for example, a suitable electrical discharge machining of the material of the mould.

The invention further relates to a method for sealing between the film walls of the bag a medium feed-through part according to claim 10. By this method, the rough surface structure of the sealing sides at least largely disappears, and preferably even fully disappears, during the sealing-in operation, so that a flat and smooth appearance of the sealed area is obtained.

The present invention also relates to a method according to claim 11 for sealing between film walls of a bag a plastic medium feed-through part, for example a spout, comprising a plastic body which forms a channel for dispensing a medium from the bag and/or feeding it to the bag, which body has sealing sides situated opposite each other, each for achieving a sealed connection to an adjoining film wall, which sealing sides are preferably substantially flat and free from ribs, use being made of a sealing device provided with sealing elements disposed opposite each other and each having a sealing face with which the sealing element is pressed against the film wall, so that the film wall adheres to the medium feed-through part.

In the case of this method provision is made for the sealing faces of the sealing elements to have a rough surface structure, for example with a surface roughness value in accordance with the first aspect of the invention. This method produces a rough exterior of the sealing areas, but does provide considerably improved properties and production advantages compared with the smooth sealing faces of the sealing elements which have been in common use until now.

The invention will be explained in greater detail below with reference to the drawing, in which:
Fig. 1 shows in perspective an exemplary embodiment of a spout according to the invention;
Fig. 2 shows the spout of Figure 1 in a different view in perspective;
Fig. 3 shows the spout of Figure 1 in top view;
Fig. 4 shows the spout of Figure 1 in side view;
Fig. 5 shows the spout of Figure 1 in cross section;
Fig. 6 shows a bag provided with the spout according to Figure 1;
Fig. 7 shows a variant of the spout of Figures 1 - 5;
Fig. 8 shows the spout of Figures 1 - 5 in a side-gusset bag; and
Fig. 9 shows in cross section the spout of Figures 1 - 5 during its sealing in between film walls with sealing elements according to the invention.

A number of aspects of the invention will be explained in greater detail below with reference to the medium feed-through part embodied as a spout by way of example.

The spout 1 has a monolithic plastic body, which is obtained by injection moulding in a suitable mould.

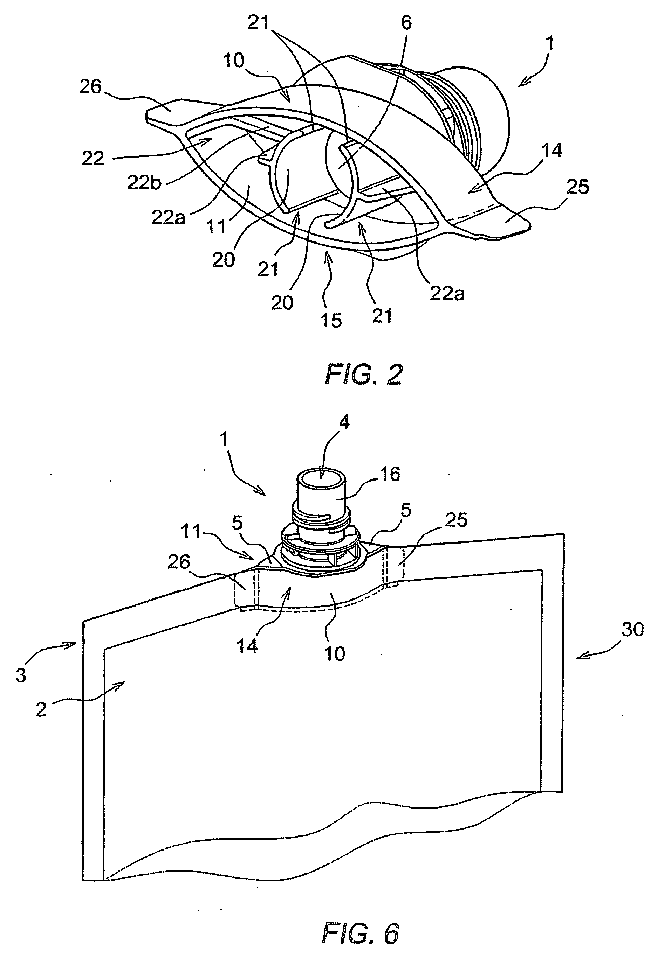

The spout 1 is designed to be sealed by means of a heat-sealing/sealing technique between film walls 2, 3 of a bag 30 (see Figure 6), here in the region of the side edges of the film walls. For example, a sealing technique is used in the case of which on either side of the spout heated sealing elements of a sealing apparatus are pressed from the outside against the film walls and in this way bring about a fusion-welded connection between the film walls and the spout 1. Other techniques, for example with ultra sound, are also conceivable.

The body of the spout 1 forms a channel 4 for dispensing a medium, such as a liquid or powder or the like, for example a drink suitable for human consumption, from the bag 30 and/or feeding it to the bag.

The body of the spout is shown in detail in the figures and has a transverse wall 5 with an opening 6 in it which forms part of the channel 4, and also with sealing walls 10, 11 which project at an angle from the transverse wall and are substantially symmetrical relative to a plane of symmetry 12 substantially perpendicular to the transverse wall 5.

The sealing walls 10, 11 are at the greatest distance from each other in a central area and are connected to each other in end areas situated in the corresponding plane of symmetry (at 13). The sealing walls 10, 11 are of a thin construction in this example.

Each sealing wall 10, 11 has an outside which forms a sealing side 14, 15, each sealing side for achieving a sealed connection to an adjoining film wall.

The body of the spout 1 further has a tubular element 16, which forms part of the channel 4 and extends from the side of the transverse wall 5 facing away from the sealing walls 10, 11. In this case the inner channel in the tubular element 16 lies in line with the opening in the transverse wall 5.

The tubular element 16 is provided here with screw thread 17 for a screw cap. In the sealed state the tubular element 16 projects beyond the periphery of the film walls of the bag 30.

As can be seen in the figures, the sealing sides 14, 15 are elongated faces, which are substantially flat and are free from outwardly projecting sealing ribs.

The sealing sides 14, 15 each have a rough surface structure over substantially their entire surface. Said rough surface structure gives rise to a sealed connection of high quality, in terms of density, load-bearing capacity and appearance, between the film walls and sealing walls 10, 11.

The surface roughness value of the sealing sides 14, 15 lies between 20 and 40 in accordance with VDI Richtlinie 3400.

It is particularly advantageous for the surface roughness value of the sealing sides to lie between 25 and 35, and in practice the optimum results are achieved with a vale between 28 and 32 in accordance with VDI 3400.

Such roughened sealing sides 14, 15 can be obtained during production of the spout 1 by using a mould for injection moulding the spout, which mould has a mould cavity with wall parts which define the sealing sides of the body and in the case of which the wall parts concerned are provided with a rough surface structure, for example obtained by a suitable electrical discharge machining operation.

It can further be seen that at each of the merging end areas of the sealing walls 10, 11 the spout 1 is provided with an outwardly projecting flap 25, 26 lying in the plane of symmetry, which flap also ultimately lies between the film walls 2, 3. The flaps 25, 26 taper outwards to a sharp side edge 25a, 26a.

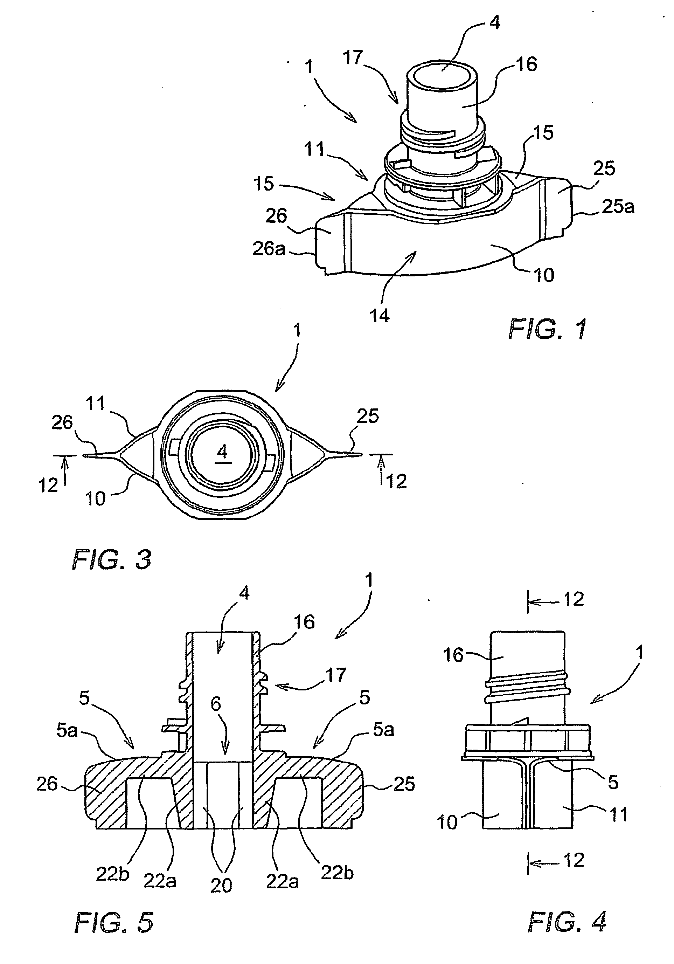

It can be seen in particular in Figures 2 and 5 that on either side of the opening in the transverse wall 5 in each case the body of the spout 1 has an anti-nesting projection 20, which projects from said side of the transverse wall 5 into the space between the sealing walls 10, 11. It can also be seen that a free passage 21 is present between each of the anti-nesting projections 20 and each adjacent sealing wall 10, 11, in such a way that said sealing wall 10, 11 is movable flexibly towards the other sealing wall, thereby reducing said free passage.

It can also be seen that in the area between each anti-nesting projection 20 and the adjacent end areas of the sealing walls 10, 11 connecting to each other a reinforcement rib 22 lying substantially in the plane of symmetry is present, which reinforcement rib is integral with the transverse wall 5.

The reinforcement rib 22 shown is substantially L-shaped with a leg 22a substantially at right angles to the transverse wall 5 and integral with an anti-nesting projection 20, and with another leg 22b substantially along the second side of the transverse wall 5 and integral with said transverse wall 5.

Each anti-nesting projection 20 here forms in cross section parallel to the transverse wall 5 a segment of a circular ring. Furthermore, each anti-nesting projection 20 directly adjoins the opening in the transverse wall 5, so that the anti-nesting projections 20 here lie in line with the wall of the tubular element 16.

The anti-nesting projections 20 here continue to the plane of the free edges of the sealing walls 10, 11.

The anti-nesting projections 20 prevent a spout 1 with its tubular element 16 from being able to nest in another spout 1, which prevents problems with the feeding of the spouts to the sealing equipment. Medium can flow out of the bag through the passages 21 to the channel 4, so that "dead zones" are prevented.

The ribs 22 reinforce the spout 1 in such a way that during the sealing operation the areas near the ends of the sealing walls connecting to each other deform upwards, say from the edge of the bag outwards. It can be seen in Figure 5 in particular that the outermost ends of the transverse wall 5, viewed in the direction from the free edge of sealing walls 10, 11 towards the transverse wall 5, lie lower down than the central part of the transverse wall 5. This means that the transverse wall 5 has between the central part and each outermost end a shoulder part 5a sloping off towards the outermost end, so that at those points of the tubular element the transverse wall 5 slopes off in a direction away from there. This sloping line continues at the flaps 25, 26.

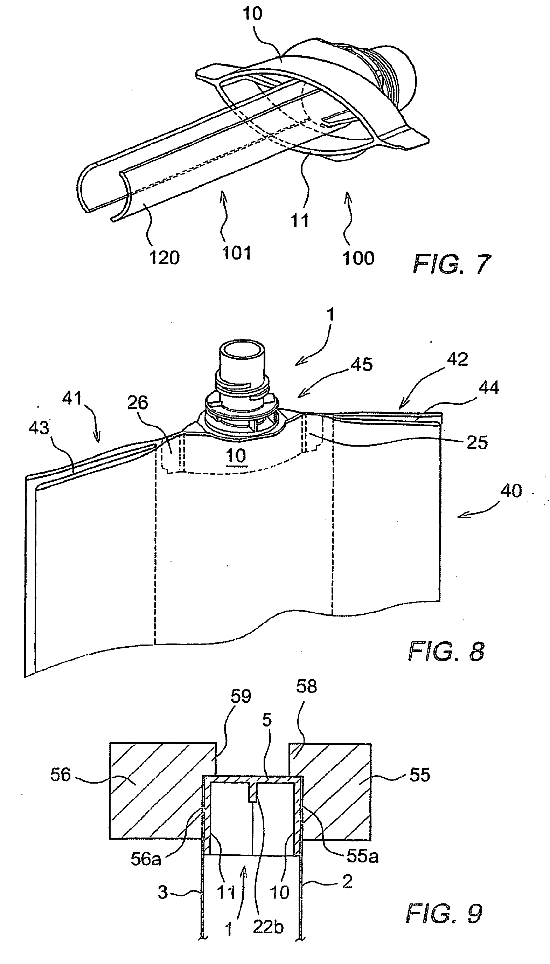

Figure 7 shows a spout 100 as a variant of the spout 1. The spout 100 is provided with an element 101 for holding the bag open, which element projects beyond the sealing walls 10, 11, preferably substantially in line with the channel.

The element 101 is in fact obtained here by extending the anti-nesting projections 20 to projections 120. Holes may also be provided in those projections. In this way a more or less tubular element 101 is obtained, so that the inside of said element is in communication with the channel 4.

The element 101 prevents the bag from falling shut while it is being emptied.

In Figure 8 the spout 1 is placed in a side-gusset bag 40 with on each side 41, 42 a part of each film wall 43, 44 folded inwards, so that a fourfold film wall thickness is present there, and a central part 45 is formed by two unconnected film walls. The spout 1 is placed in the central part 45. In order to obtain an optimum sealed connection, provision is made for the opposite sealing faces of the sealing elements (not shown) to be designed with recessing in the region of the fourfold film wall thickness (at 41 and 42), in order to compensate for the lower film wall thickness relative to the central part 45.

For an optimum sealed connection, the sealing faces of the sealing elements are also provided with a recess at the level of each flap 25, 26 of the spout 1. This means that excessive pressure on the plastic material of the flaps 25, 26 during the sealing is avoided, so that melting plastic material does not run in an undesirable way.

The sealing faces of the sealing elements in the area which ultimately presses against the sealing walls 10, 11 can also be provided with suitable local recesses, preferably shallow recesses.

Figure 9 illustrates diagrammatically in a cross-sectional view the method for sealing a plastic medium feed-through part, in this example the spout 1 of Figures 1 - 5, between film walls 2, 3 of a bag 30. In Figure 9 the transverse wall 5 can be seen with an outermost edge. Furthermore, the sealing walls 10, 11 situated opposite each other can be seen, which sealing walls connect to the outermost edge of the transverse wall 5.

In the method use is made of a sealing device provided with sealing elements 55, 56, which are disposed opposite each other and each have a sealing face 55a, 56a by means of which the sealing element is pressed against the film wall 2, 3, so that the film wall adheres to the spout 1.

The sealing elements can operate by any suitable technique, for example by heating, or they may be driven ultrasonically.

The sealing elements 55, 56 each have on the side facing the sealing element situated opposite an overhanging rib 58, 59 which during sealing rests on top of the outermost edge area of the transverse wall 5, so that in the region of that outermost edge melting plastic material is prevented from running out between the film wall 2, 3 and the spout 1. Melting material may possibly still flow towards the free edge of the sealing wall 10, 11 and run out at that side, but that is considerably less of a problem.

## Claims

1. Plastic medium feed-through part (1), for example a spout, designed to be sealed by means of a sealing technique between film walls (2, 3) of a bag (30), comprising a plastic body which forms a channel (4) for dispensing a medium from the bag and/or feeding it to the bag, which body has sealing sides (10, 11) situated opposite each other, each for achieving a sealed connection to an adjoining film wall, which sealing sides are substantially flat and free from ribs, **characterized in that** each sealing side has a rough surface structure, preferably over the entire surface of each sealing side, a strip along the free edge of each sealing side possibly not having a rough surface structure, so that no sealed connection is achieved there,
in which the surface roughness value of the sealing sides lies between 20 and 40 in accordance with VDI Richtlinie 3400.

2. Medium feed-through part according to claim 1, in which the surface roughness value of the sealing sides lies between 23 and 35 in accordance with VDI Richtlinie 3400.

3. Medium feed-through part according to claim 2, in which the surface roughness value of the sealing sides lies between 26 and 34 in accordance with VDI Richtlinie 3400.

4. Medium feed-through part according to one or more of the preceding claims, in which the body has a transverse wall (5) with an opening (6) in it which formes part of the channel (4), and also with sealing walls (10, 11) which project at an angle from the transverse wall and are substantially symmetrical relative to a plane of symmetry (12) substantially perpendicular to the transverse wall (5).

5. Medium feed-through part according to claim 4, in which the sealing walls are at the greatest distance from each other in a central area and are connected to each other in end areas situated in the corresponding plane of symmetry.

6. Medium feed-through part according to one or more of the preceding claims, in which the body has a tubular element (16) which forms part of the channel (4).

7. Medium feed-through part according to claims 4 and 6, in which the tubular element extends from the side of the transverse wall (5) facing away from the sealing walls (10, 11).

8. Bag (30) provided with a medium feed-through part according to one or more of the preceding claims.

9. Mould for injection moulding a medium feed-through part (1) according to one or more of the preceding claims, in which the mould has a mould cavity with wall parts which define the sealing sides (10, 11) of the body and in the case of which the wall parts concerned are provided with a rough surface structure, for example obtained by a suitable electrical discharge machining operation.

10. Method for sealing a plastic medium feed-through part (1) according to one or more of claims 1-7 between film walls (2, 3) of a bag (30), in which use is made of a sealing device provided with sealing elements (55, 56) disposed opposite each other and each having a sealing face (55a, 56a) by means of which the sealing element is pressed against the film wall (2, 3) so that the film wall adheres to the medium feed-through part (1), **characterized in that** the sealing faces are substantially flat, so that the rough surface structure of the sealing walls at least partially disappears during the sealing, and a flat unit is preferably obtained.

11. Method for sealing between film walls (2, 3) of a bag (30) a plastic medium feed-through part (1), for example a spout, comprising a plastic body which forms a channel (4) for dispensing a medium from the bag and/or feeding it to the bag, which body has sealing sides (10, 11) situated opposite each other, each for achieving a sealed connection to an adjoining film wall, which sealing sides are substantially flat and free from ribs, use being made of a sealing device provided with sealing elements disposed opposite each other and each having a sealing face with which the sealing element is pressed against the film wall, so that the film wall adheres to the medium feed-through part, **characterized in that** the sealing faces of the sealing elements have a rough or structured surface structure.

## Patentansprüche

1. Kunststoff-Mediumdurchführungsteil (1), wie etwa ein Ausgießer, das dazu bestimmt ist, mit Hilfe einer Schweißtechnik zwischen Folienwänden (2, 3) eines Beutels (30) verschweißt zu werden, enthaltend einen Kunststoffkörper, der einen Kanal (4) zum Abgeben eines Mediums aus dem Beutel und/oder zum Einleiten desselben in den Beutel ausbildet, wobei der Körper Schweißseiten (10, 11) aufweist, die einander gegenüberliegen, um jeweils eine Schweißverbindung mit einer angrenzenden Folienwand zu bilden, wobei die Schweißseiten im wesentlichen flach und frei von Rippen sind, **dadurch gekennzeichnet, dass** jede Schweißseite eine raue Oberflächenstruktur vorzugsweise über die gesamte Oberfläche jeder Schweißseite hat und ein Streifen entlang eines freien Randes jeder Schweißseite möglicherweise keine raue Oberflächenstruktur hat, so dass dort keine Schweißverbindung erzielt wird, wobei der Oberflächenrauigkeitswert der Schweißseiten zwischen 20 und 40 gemäß der VDI-Richtlinie 3400 liegt.

2. Mediumdurchführungsteil nach Anspruch 1, bei dem der Oberflächenrauigkeitswert der Schweißseiten zwischen 23 und 35 gemäß der VDI-Richtlinie 3400 liegt.

3. Mediumdurchführungsteil nach Anspruch 2, bei dem der Oberflächenrauigkeitswert der Schweißseiten zwischen 26 und 34 gemäß der VDI-Richtlinie 3400 liegt.

4. Mediumdurchführungsteil nach wenigstens einem der vorhergehenden Ansprüche, bei dem der Körper eine Querwand (5) mit einer Öffnung (6) in derselben, die einen Teil des Kanals (4) bildet, und zudem Schweißwänden (10, 11) hat, die in einem Winkel von der Querwand hervorragen und im wesentlichen symmetrisch im Bezug auf eine Symmetrieebene (12) sind, die im wesentlichen senkrecht zur Querwand (5) ist.

5. Mediumdurchführungsteil nach Anspruch 4, bei dem die Schweißwände ihren größten Abstand voneinander in einem zentralen Bereich haben und miteinander in Endbereichen verbunden sind, die sich in der entsprechenden Symmetrieebene befinden.

6. Mediumdurchführungsteil nach wenigstens einem der vorhergehenden Ansprüche, bei dem der Körper ein röhrenförmiges Element (16) hat, das einen Teil des Kanals (4) bildet.

7. Mediumdurchführungsteil nach Anspruch 4 und 6, bei dem sich das röhrenförmige Element von der Seite der Querwand (5) erstreckt, die den Schweißwänden (10, 11) abgewandt ist.

8. Beutel (30), der mit einem Mediumdurchführungsteil nach wenigstens einem der vorhergehenden Ansprüche versehen ist.

9. Form zum Spritzgießen eines Mediumdurchführungsteils (1) nach wenigstens einem der vorangehenden Ansprüche, wobei die Form einen Formhohlraum mit Wandteilen hat, die die Schweißseiten (10, 11) des Körpers bilden, wobei in diesem Fall die betroffenen Wandteile mit einer rauen Oberflächenstruktur versehen sind, die man beispielsweise durch einen geeigneten Elektroentladungs-Spanabhebungsvorgang erhält.

10. Verfahren zum Verschweißen eines Kunststoff-Mediumdurchführungsteils (1) nach wenigstens einem der Ansprüche 1 bis 7 zwischen Folienwänden (2, 3) eines Beutels (30), bei dem von einer Schweißvorrichtung Gebrauch gemacht wird, die mit Schweißelementen (55, 56) ausgestattet ist, die einander gegenüberliegend angeordnet sind und jeweils eine Schweißfläche (55a, 56a) aufweisen, mit deren Hilfe das Schweißelement gegen die Folienwand (2, 3) gedrückt wird, so dass die Folienwand an dem Mediumdurchführungsteil (1) haftet, **dadurch gekennzeichnet, dass** die Schweißflächen im wesentlichen flach sind, so dass die raue Oberflächenstruktur der Schweißwände wenigstens teilweise während des Schweißens verschwindet und vorzugsweise eine flache Einheit erzeugt wird.

11. Verfahren zum Verschweißen zwischen Folienwänden (2, 3) eines Beutels (30) eines Kunststoff-Mediumdurchführungsteils (1), wie etwa eines Ausgießers, enthaltend einen Kunststoffkörper, der einen Kanal (4) zum Abgeben eines Mediums aus dem Beutel und/oder zum Einleiten desselben in den Beutel ausbildet, wobei der Körper Schweißseiten (10, 11) aufweist, die einander gegenüberliegen, um jeweils eine Schweißverbindung mit einer angrenzenden Folienwand zu bilden, wobei die Schweißseiten im wesentlichen flach und frei von Rippen sind, wobei von einer Schweißvorrichtung Gebrauch gemacht wird, die mit Schweißelementen ausgestattet ist, die einander gegenüberliegen und jeweils eine Schweißfläche haben, mit der das Schweißelement gegen die Folienwand gedrückt wird, so dass die Folienwand an dem Mediumdurchführungsteil haftet, **dadurch gekennzeichnet, dass** die Schweißflächen der Schweißelemente eine raue oder strukturierte Oberflächenstruktur haben.

## Revendications

1. Pièce de passage d'alimentation de matière en plastique (1), par exemple, un bec verseur, conçue pour être scellée au moyen d'une technique de scellage entre des parois de film (2, 3) d'un sac (30), comprenant un corps en plastique qui forme un canal (4) pour distribuer une matière du sac et/ou l'alimenter au sac, lequel corps a des côtés de scellage (10, 11) situés à l'opposé l'un de l'autre, chacun pour obtenir un raccordement scellé sur une paroi de film attenante, lesquels côtés de scellage sont sensiblement plats et dépourvus de nervures, **caractérisée en ce que** chaque côté de scellage a une structure de surface rugueuse, de préférence sur toute la surface de chaque côté de scellage, une bande le long du bord libre de chaque côté de scellage n'ayant éventuellement pas de structure de surface rugueuse de sorte que l'on obtient un raccordement non scellé à cet endroit, dans laquelle la valeur de rugosité de surface des côtés de scellage est comprise entre 20 et 40 selon les directives du VDI (« Verein der deutschen Ingenieure -Richtlinien ») n°3400.

2. Pièce de passage d'alimentation de matière selon la revendication 1, dans laquelle la valeur de rugosité de surface des côtés de scellage est comprise entre 23 et 35 selon les directives du VDI (« Verein der deutschen Ingenieure -Richtlinien ») n°3400.

3. Pièce de passage d'alimentation de matière selon la revendication 2, dans laquelle la valeur de rugosité de surface des côtés de scellage est comprise entre 26 et 34 selon les directives du VDI (« Verein der deutschen Ingenieure - Richtlinien ») n°3400.

4. Pièce de passage d'alimentation de matière selon une ou plusieurs des revendications précédentes, dans laquelle le corps a une paroi transversale (5) avec une ouverture (6) dans celle-ci qui fait partie du canal (4) et également avec les parois de scellage (10, 11) qui font saillie avec un angle à partir de la paroi transversale et sont sensiblement symétriques par rapport à un plan de symétrie (12) sensiblement perpendiculaire à la paroi transversale (5).

5. Pièce de passage d'alimentation de matière selon la revendication 4, dans laquelle les parois de scellage sont à la plus grande distance l'une de l'autre dans une zone centrale et sont raccordées entre elles dans les zones d'extrémité dans le plan correspondant de symétrie.

6. Pièce de passage d'alimentation de matière selon une ou plusieurs des revendications précédentes, dans laquelle le corps a un élément tubulaire (16) qui fait partie du canal (4).

7. Pièce de passage d'alimentation de matière selon les revendications 4 et 6, dans laquelle l'élément tubulaire s'étend à partir du côté de la paroi transversale (5) qui est tourné en éloignement des parois de scellage (10, 11).

8. Sac (30) prévu avec une partie de passage d'alimentation de matière selon une ou plusieurs des revendications précédentes.

9. Moule pour mouler par injection une partie de passage d'alimentation de matière (1) selon une ou plusieurs des revendications précédentes, dans lequel le moule a une cavité de moule avec des parties de paroi qui définissent les côtés de scellage (10, 11) du corps et dans le cas duquel les parties de paroi concernées sont prévues avec une structure de surface rugueuse, par exemple, obtenue par une opération d'usinage par décharge électrique appropriée.

10. Procédé pour sceller une partie de passage d'alimentation de matière (1) selon une ou plusieurs des revendications 1 à 7, entre les parois de film (2, 3) d'un sac (30), dans lequel on utilise un dispositif de scellage prévu avec des éléments de scellage (55, 56) disposés à l'opposé l'un de l'autre et ayant chacun une face de scellage (55a, 56a) au moyen de laquelle l'élément de scellage est pressé contre la paroi de film (2, 3), de sorte que la paroi de film adhère sur la partie de passage d'alimentation de matière (1), **caractérisé en ce que** les faces de scellage sont sensiblement plates, de sorte que la structure de surface rugueuse des parois de scellage disparaît au moins partiellement pendant le scellage et on obtient de préférence une unité plate.

11. Procédé pour le scellage entre des parois de film (2, 3) d'un sac (30), d'une partie de passage d'alimentation de matière plastique (1), par exemple un bec verseur, comprenant un corps en plastique qui forme un canal (4) pour distribuer une matière à partir du sac et/ou l'alimenter au sac, lequel corps a des côtés de scellage (10, 11) situés à l'opposé l'un de l'autre, chacun pour obtenir un raccordement scellé sur une paroi de film attenante, lesquels côtés de scellage sont sensiblement plats et dépourvus de nervures, on utilise un dispositif de scellage prévu avec des éléments de scellage disposés à l'opposé l'un de l'autre et chacun ayant une face de scellage avec laquelle l'élément de scellage est pressé contre la paroi de film, de sorte que la paroi de film adhère sur la pièce de passage d'alimentation de matière, **caractérisé en ce que** les faces de scellage des éléments de scellage ont une structure de surface rugueuse ou structurée.
